# EUROPEAN PATENT SPECIFICATION

(11) **EP 0 618 726 B1**
(45) Date of publication and mention of the grant of the patent: **28.11.2001**
(21) Application number: 93105133.8
(22) Date of filing: 29.03.1993
(51) Int. Cl.: H04N 7/08

(54) **Use of certification signals being included on a determined active line of a television signal for identifying a publicity insert contained in a television signal and control circuit for identifying publicity inserts according to such use**
Verwendung von in einer aktiven Zeile eines Fernsehsignals vorhandenen Bestätigungssignalen zum Identifizieren von einem in einem Fernsehsignal enthaltenen Werbeinserat und Steuerschaltkreis zum Identifizieren von Werbeinseraten nach einer solchen Verwendung
Utilisation de signaux de certification compris dans une ligne active déterminée d'un signal de télévision pour identifier une insertion publicitaire comprise dans un signal de télévision et circuit de contrôle pour identifier insertions publicitaires d'après ladite utilisation

(43) Date of publication of application: 05.10.1994
(73) Proprietor: S.I.SV.EL. S.p.A., 10060 None (TO) (IT)
(72) Inventor: Lanyon, James Reginald George, Sark, Channel Islands (GB)
(74) Representative: Gaggini, Carlo, Dipl.Ing.

(56) References cited:
- EP-A- 0 530 669
- AU-B- 2 159 388
- FR-A- 2 664 778
- GB-A- 2 210 526
- US-A- 4 647 974
- US-A- 4 750 053
- US-A- 4 855 827
- US-A- 4 857 999
- SIEMENS COMPONENTS vol. 24, no. 2 , April 1989 , MUNCHEN DE pages 63 - 67 XP39748 W. GEFFEKEN 'Easy Programming of Video Recorders.'
- FUNKSCHAU vol. 60, no. 20 , 23 September 1988 , MUNCHEN DE pages 32 - 36 'Fernsehbilder als Datenträger.'

## Description

The present invention refers to a use of certification signals being included on a determined active line of a television signal and a control circuit for identifying publicity inserts according to such use.

The insertion of publicity during television transmissions is somewhat disturbing, particularly if one wishes to record a transmission (for example a film). In order to avoid that the inserts are also recorded it is necessary to be present and provide for stopping the recorder in connection with each insert and to restart it when the insert has finished.

Naturally this cannot be carried out in all the numerous cases in which the transmission that one wishes to record is at an hour in which it is not possible to be personally present, or if it takes place simultaneously with another transmission that one wishes to see.

In that case all the inserts are recorded and, if it is desired to remove them, it is necessary to review the recording and provide to re-record it on another cassette, removing the inserts; this however requires the availability of two separate recorders or of a double deck recorder, and in any case the quality of the registration obtained by re-recording is worse than that of the original tape.

Systems which automatically detect the publicity inserts are known from GB-A-2210526 and US-A-4857999.

GB-A-2210526 discloses an apparatus for controlling video or audio equipment which can detect amongst other types of television programmes publicity inserts and can switch channels temporarily during the publicity inserts and/or interrupt recording to eliminate the publicity inserts. The detection of the type of each television programme is effected on the basis of predetermined code signals contained in the transmitted television signal alongside the normal television programme. The predetermined code signals are transmitted at least at the start of every television programme segment or publicity insert and may be transmitted continuously.

US-A-4857999 discloses similar equipment as GB-A-2210526 to detect the presence of specific programme material in a television signal such as a publicity insert. The detection does not require the insertion of special identification signals or codes into the television signal but uses the closed captioning (text) for the deaf signal that is included in line 21 of the NTSC video signal and also in line 16 of the PAL signal.

The problem is that the detection of publicity inserts by comparing closed captioning (text) for the deaf signal with predetermined text does not reliably work since publicity inserts can also include text for deaf people which does not significantly differ from the text for the "normal" programme contents. On the other hand, television broadcasters like to include a signalling for publicity inserts into their broadcasted television programmes since advertisement industry (which is financing broadcasters at least partially) does not wish that publicity inserts can be automatically omitted by the consumer who in contrast thereto is explicitly intended by industry to watch the publicity insert.

EP-A-0594919 discloses that there is a strong desire from advertising industry to have evidence from the broadcasters that a certain publicity insert has been transmitted at a certain time. Such evidence is necessary for billing purposes. The required certification is made by inclusion of a specific certification signal during each publicity insert into the first active lines of the television signal and by recording the television signal plus certification signal by tape recorder in the office of a notary public.

The aim of the invention is to provide a new use of the certification signal in order to identify a publicity insert.

The invention is as defined in the claims.

The certification signals used by the invention can consist in coded signals containing identification of the client and, eventually, the date and time of the transmission; such signals must be predictably present at least at the beginning and at the end of the publicity insert, so as to be able to verify the duration. The invention proposes the use of these certification signals thus lend themselves for identifying the presence or absence of publicity inserts within the television signal.

The certification signals are inserted in coded form during one of the first active lines of the video signal (active lines begin from line 23 respectively 336; one can think of utilising for example line 24 or line 337) in order to minimise the eventual disturbing effect on the image, however improbable inasmuch the first active lines are almost never visible on the screen of the apparatus, provided that, in order to avoid seeing the return lines, a certain measure of 'overscan' is always used; this solution has the advantage of allowing the client to insert its personal identification signal in the registration of the same publicity insert.

The characteristics and advantages of the method according to the invention will appear clear from the description that follows, carried out with reference to the annexed drawings, supplied as a purely explanatory and non-limiting example, in which:
figure 1 represents the principle diagram of a receiver of television signals that utilises the method according to the invention;
figure 2 represents the principle diagram of a significant part of the logic control circuit of the receiver of figure 1.

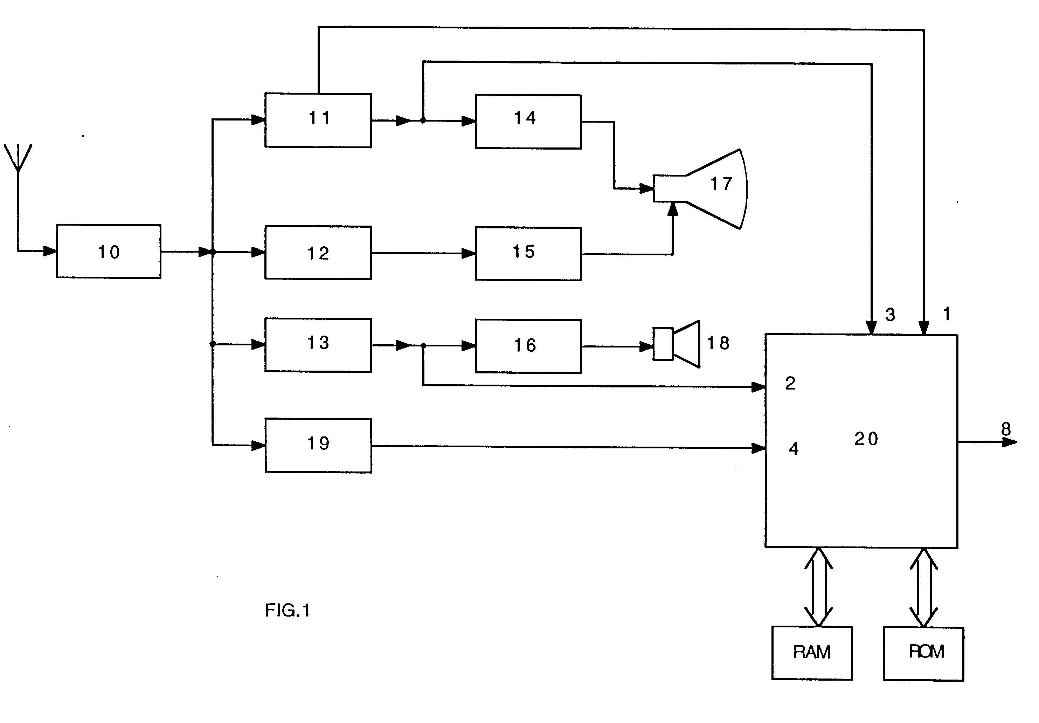

In figure 1 reference number 10 indicates the block of the tuning and amplification circuits of the received television signal; reference number 11 indicates the block of the decoding and matrix circuits of the video luminance and crominance signals; reference number 12 indicates the block of the extraction circuits of the video synchronism signals; reference number 13 indicates the block of the audio signal amplification and decoding circuits; reference number 14 indicates the block of the amplification circuits of the colour signals R,G,B; reference number 15 indicates the block of the generation circuits of the deflection signals for the image display device; reference number 16 indicates the block of the amplification circuits of the audio signal; reference number 17 indicates the image display device, for example a colour picture-tube; reference number 18 indicates the sound reproduction device of the audio signals, for example a loudspeaker; reference number 19 indicates the block of extraction and decoding circuits of the 'teletext' signal.

Finally reference number 20 indicates the block of the control circuits, being specific to the receiver according to the invention; the block 20, as previously said, may be for example realised utilising a microprocessor, coupled to a read and write memory (RAM) and to a read only memory (ROM).
In the first the data received will be gradually memorised that is of interest for the identifying of publicity inserts; in the second the operative instructions (programs) for the microprocessor itself will be memorised.

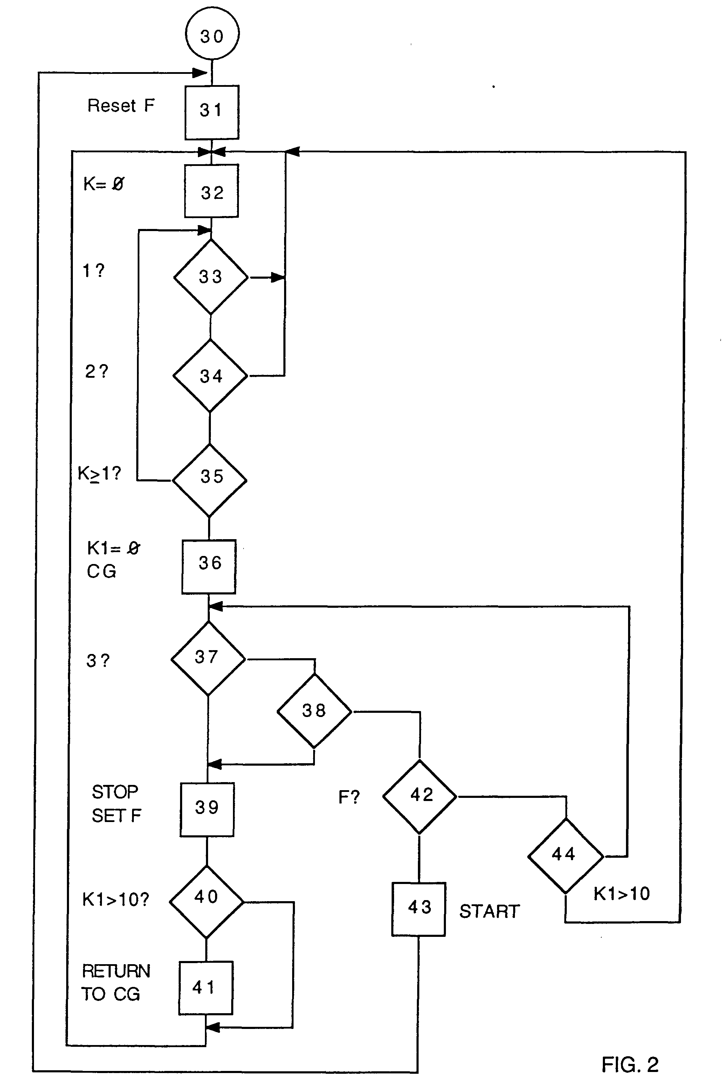

With the numbers from 1 to 4 signals are illustrated coming from circuits 11, 13 and 19 and applied in input to the circuit 20; precisely:
1 - indicative signal of the presence of video modulation;
2 - indicative signal of the presence of audio modulation;
3 - video signal;
4 - 'teletext' signal.
All such signals are easily extractable with known techniques by relative circuits existing in the receiver.
Number 8 indicates the output signal of circuit 20 for the control for example of the recording; it is typically a yes-no signal. The signal 8 will be applied to the recording device, normally through a suitable actuator (actuation-de-actuation of the pause function).
Alternatively the signal 8 could be utilised for other functions, for example for activating the muting function of the audio of the television.
In figure 1 the circuit of a television has been practically represented; it is intended however that a part of the described circuits are not essential for the functioning of the receiver according to the invention, that could, for example, be part of a video recorder rather than of a television.
The functioning of the circuit 20 of figure 1 will now be explained making reference to figure 2 in which the principle diagram of the logic control circuit of the receiver of figure 1 is illustrated.
The first problem to be solved is that of detecting the exact instants of the beginning and end of the insert; such instants are characterised by a transition (from the normal transmission to the insert and vice versa); the second problem is that of deciding, once a transition has been detected, whether it concerns the initial or final transition.
In fact during such transitions numerous characteristics of the signal undergo modifications.
For simplicity the initial TI will indicate the initial transition from the normal transmission to the insert and with the initial TF the final transition from the insert to the normal transmission.
Normally the initial transition (TI) lasts about 2 seconds, and the same is so for the final transition (TF); the insert lasts approximately 3 minutes.
Normally the two transition phases differentiate from the normal transmission and publicity insert phases due to the absence of video and audio modulations and, eventually, also of the 'teletext' signal.
The duration of normal transmission portions included between two inserts is on average of 12 minutes.
Based on these considerations, and observing a transmission for about half an hour before the beginning of the transmission that is of interest to record, it is possible to identify at least three transitions, and from the duration that takes place between them, establish whether the next transition will be an initial or final transition of the insert.
In such a way it is possible interrupt the recording during the inserts.
Naturally the observation may be carried out by a logic circuit, for example a microprocessor circuit, duly programmed; the same circuit will then provide for controlling the registration.
In figure 2, block 30 represents the conventional starting block of the subroutine of analysis and evaluation of the characteristics of the television signal, and of deciding whether to interrupt or not the recording of the television signal. The control passes to block 31.
Block 31 provides to zero the recording stop flag F and then passes the control to block 32.
Block 32 provides to zero the counter K that is a second-counter and pass so the control to the block 33.
Block 33 is a test block, that provides to verify whether the signal n. 1 is present (i.e. whether the video modulation is present); in the affirmative case control passes to block 34; in the negative case control returns to the block 32. In the figure in all the test blocks the YES outputs are represented below, the NO outputs are represented on the sides.
Block 34 is a test block, that provides to verify whether the signal n. 2 is present (i.e. whether the audio modulation is present); in the affirmative case the control passes to block 35; in the negative case the control returns to block 32.
Block 35 is a test block, that provides to verify, whether the second-counter K indicates that at least one second has elapsed; in the affirmative case the control passes to block 36; in the negative case control returns to block 33.
Block 36 provides to zero a second second-counter K1 and to memorise in the RAM memory the position (Cg) of the tachometer of the recorder; the control then passes to the successive block 37.
Block 37 is a test block, that provides to verify, controlling the signal n. 3, i.e. the video signal, whether, in the predetermined line, for example in line 24, a digital signal is present; in the affirmative case control passes to block 39; in the negative case control passes to block 38.
Block 38 is a test block, that provides to verify, controlling the signal n. 4, i.e. the teletext signal, whether, in the predetermined page, for example in page 779, a signal besides the zero line is present; in the affirmative case control passes to block 39; in the negative case control passes to block 42.
Block 39 provides to stop the recorder putting to 1 the output level 8 and to raise the recording stop flag F, putting it to the value 1; the control then passes to the successive block 40.
Block 40 is a test block, that provides to verify whether the second counter K1 indicates more than 10 seconds; in the affirmative case control passes to block 41; in the negative case the control returns to block 32.
Block 41 provides to rewind the recorder to the position Cg of the tachometer previously memorised; the control returns to block 32.
Block 42 is a test block, that provides to verify whether the flag F is raised; in the affirmative case control passes to block 43; in the negative case control passes to block 44.
Block 43 provides to restart the recorder so as to continue the recording, putting to zero once again the level of the output signal 8; the control then returns to block 31.
Block 44 is a test block, that provides to verify whether the counter K1 indicates a value of 10; in the affirmative case control returns to block 32; in the negative case the control passes to block 37.
The functioning of the described circuit is the following.
Every time that the simultaneous video and audio modulation absence is detected and if such absences last for at least one second, it is decided that it may concern a transition from the normal transmission to a publicity insert; the position reached by the tachometer of the recorder is therefore noted.

If a digital signal is successively detected in line 24 of the television signal, the recorder is stopped and, if from the supposed transition not more than 10 seconds have passed, the recorder is made to rewind to the memorised position of the tachometer (transition).

When a successive transition and the absence of signals in line 24 is detected, the recorder is restarted.

It is possible to provide that the number of said active line, in which the certification information relative to the publicity insert is transmitted, be manually introduced by service personal or by the user.

The control circuit is identifying said active line basing itself on the fact that it is one of the first (for example 5) or of the last (five) active lines and that said certification signal is present with a duration and a frequency which are correlated with said publicity inserts.

In any case for allowing to adapt the circuit to eventual modifications in the method of inserting certification signals that identify the publicity inserts, the memory of the program, that manages the microprocessor, could be of the type EPROM, so as to be replaced, if necessary, by service personal.

In the case of the circuit being present on a recorder and not on a television, it is possible to foresee that it is the recorder to control the television, with the aims, for example, of actuating the 'mute' function in the presence of publicity.
As resulting from the given description, the method according to the invention has substantial advantages if compared to the methods known, inasmuch the certainty of its correct functioning, i.e. correct identification of publicity inserts; besides being utilised in video recorders so as to avoid recording the publicity inserts together with the program of interest, the method may also be utilised in televisions, for example for removing the audio during the inserts or for changing programs automatically, tuning the receiver to another program previously memorised, to then return to the first upon the ended publicity message. It is evidently possible to also command other and different functions.
It is obvious that, while remaining with the principle of the invention, numerous variations are possible to the characteristics of the identification method of a publicity insert described as an example, without for this departing from the scope of novelty inherent in the inventive idea, as it is clear that apparatuses utilised in connection with the described method in the practical realisation of the invention can be varied in their specific characteristics and that components utilised can be replaced with elements being technically equivalent.
For example the described procedure in connection with figure 2 is clearly not the only one possible; it is possible to simply entrust the presence of signals in line 24 or in the teletext page 779 for stopping simultaneously with said signals the recording; or it is possible to provide a commutation with which the user can choose one or the other possibility; and so on.
Another variation could then consist in that, in the case in which it is decided to identify the presence of a publicity insert by way of, both the detection of absence of video and audio modulation, and the appearance of an identification signal of publicity messages, if the latter is detected, within a period of time being lower than a pre determined value (e.g.. 1 s), from the transition detected in following the absence of modulation, the video recorder is not made to rewind back to the position that it had at the moment of the aforementioned transition.

## Claims

1. Method of using certification signals being included on a determined active line of a television signal, said certification signals being originally utilised for automatically certifying that predetermined specific publicity inserts have been transmitted at a certain time by said television signal, said method being such that the presence or absence of certification signals is detected by means of a control circuit operated to identify said determined active line in one of the first or last active lines, wherein said certification signals are present on the identified active line with a duration and a frequency which are correlated with said publicity inserts, and wherein said method comprises controlling a receiving apparatus for television signals in accordance with the detected presence or absence of said certification signals.

2. Method according to claim 1, wherein the number of said determined active line is introduced into said control circuit manually by service personal or by the user.

3. Method according to claim 1 or 2, wherein a simultaneous video and audio modulation absence is detected and utilised together with the information of the presence of said certification signals for controlling the functioning of said receiving apparatus for television signals.

4. Control circuit for identifying publicity inserts according to the method as defined in claim 3, **characterised by** means for implementing the following steps:
• Detecting the simultaneous video and audio modulation absence for a predetermined period;
• memorising the position (Cg) reached by a tachometer of a recorder used with said receiving apparatus;
• detecting the appearance, within a determined period, of a said digital certification signal in said determined active line of said television signal;
• stopping the recorder and making it rewind to the memorised position of the tachometer, and
• restarting the recorder as soon as it has detected both the absence of said digital certification signals in said television signal and a new simultaneous video and audio modulation absence for said predetermined period.

5. Control circuit for identifying publicity inserts according to the method as defined in claim 3, **characterised by** means for implementing the following steps:
• Detecting the simultaneous video and audio modulation absence for a predetermined period;
• detecting the appearance, within a determined period, of a said digital certification signal in said determined active line of said television signal ;
• stopping a recorder used with said receiving apparatus, and
• restarting the recorder as soon as is detected both the absence of said digital certification signals in said television signal and a new simultaneous video and audio modulation absence for said predetermined period.

6. Control circuit for identifying publicity inserts according to the method as defined in any of claims 1 to 3, **characterised by** means for controlling the functioning of said receiving apparatus for television signals by stopping a recording operation in concomitance with the detected presence of said certification signal.

7. Control circuit for identifying publicity inserts according to the method as defined in any of claims 1 to 3, **characterised by** means for controlling the functioning of said receiving apparatus by suppressing the audio during publicity inserts identified by said detection of said certification signals.

8. Control circuit for identifying publicity inserts according to the method as defined in any of claims 1 to 3, **characterised by** means for controlling the functioning of said receiving apparatus by automatically changing over programs, tuning the apparatus to another program previously memorised and returning to the first program at the end of by the publicity insert in response to said detection of said certification signals.

9. A system comprising a control circuit for identifying publicity inserts according to claim 7 or 8, the system further comprising a video recorder for automatically controlling the functioning of a television receiver in order to suppress the audio or to change programs automatically during publicity inserts.

## Patentansprüche

1. Verfahren zur Verwendung von in einer bestimmten aktiven Zeile eines Fernsehsignals enthaltenen Bestätigungssignalen, welche Bestätigungssignale ursprünglich zum automatischen Bestätigen verwendet wurden, ob bestimmte Werbeinserate zu einem bestimmten Zeitpunkt mit dem genannten Fernsehsignal übertragen worden waren, wobei das genannte Verfahren so ausgelegt ist, dass das Vorhandensein oder das Fehlen von Bestätigungssignalen mit Hilfe eines Steuerschaltkreises festgestellt wird, der dazu dient, die genannte bestimmte aktive Zeile in den ersten oder letzten aktiven Zeilen zu identifizieren, in welchen die genannten Bestätigungssignale in der identifizierten aktiven Zeile vorhanden sind, mit einer Dauer und einer Frequenz, die den genannten Werbeinseraten zugeordnet sind, und wobei das genannte Verfahren eine Steuerung eines Empfangsgerätes für Fernsehsignale umfasst, die mit dem festgestellten Vorhandensein oder Fehlen der genannten Bestätigungssignale übereinstimmt.

2. Verfahren gemäss dem Anspruch 1, in welchem die Zahl der genannten bestimmten aktiven Zeile durch das Servicepersonal oder durch den Benutzer von Hand in den genannten Steuerschaltkreis eingegeben wird.

3. Verfahren gemäss dem Anspruch 1 oder 2, in welchem ein gleichzeitiges Fehlen von Video- und Audio-Modulation festgestellt wird und zusammen mit der Meldung des Vorhandenseins der genannten Bestätigungssignale dazu verwendet wird, die Funktion (Betriebszustand) des genannten Empfangsgerätes für Fernsehsignale zu steuern.

4. Steuerschaltkreis zum Identifizieren von Werbeinseraten-Einschaltungen gemäss dem im Anspruch 3 definierten Verfahren, **gekennzeichnet durc**h Mittel zum Ausführen der folgenden Arbeitsschritte:
• Feststellen des Fehlens der gleichzeitigen Video- und Audio-Modulation über eine vorausbestimmte Dauer;
• Speichern der momentanen Stellung (Cg) des Tachometers (Zählwerkes) eines mit dem Fernsehempfänger verwendeten Aufnahmegerätes;
• Feststellen des Auftretens, während einer bestimmten Zeitspanne, eines genannten digitalen Bestätigungssignals in der genannten bestimmten aktiven Zeile des genannten Fernsehsignals;
• Stoppen des Aufnahmegerätes und Rückspulen des Aufnahmegerätes bis zur gespeicherten Stelle auf dem Tachometer (Zählgerät), und
• Wiedereinschalten des Aufnahmegerätes, sobald sowohl das Fehlen der genannten digitalen Bestätigungssignale im genannten Fernsehsignal als auch ein neues Fehlen einer gleichzeitigen Video- und Audio-Modulation während der genannten vorausbestimmten Zeitspanne festgestellt wird.

5. Steuerschaltkreis zum Identifizieren von Werbeinseraten-Einschaltungen gemäss dem im Anspruch 3 definierten Verfahren, **gekennzeichnet durch** Mittel zum Ausführen der folgenden Arbeitsschritte:
• Feststellen des Fehlens der gleichzeitigen Video- und Audio-Modulation über eine vorausbestimmte Dauer;
• Feststellen des Auftretens, während einer bestimmten Zeitspanne, eines genannten digitalen Bestätigungssignals in der genannten bestimmten aktiven Zeile des genannten Fernsehsignals;
• Stoppen eines mit dem genannten Empfangsgerät verwendeten Aufnahmegerätes, und
• Wiedereinschalten des Aufnahmegerätes, sobald sowohl das Fehlen der genannten digitalen Bestätigungssignale im genannten Fernsehsignal als auch ein neues Fehlen einer gleichzeitigen Video- und Audio-Modulation während der genannten vorausbestimmten Zeitspanne festgestellt wird.

6. Steuerschaltkreis zum Identifizieren von Werbeinseraten-Einschaltungen gemäss dem in einem der Ansprüche 1 bis 3 definierten Verfahren, **gekennzeichnet durch** Mittel zum Steuern der Funktion (des Betriebszustandes) des genannten Empfangsgerätes für Fernsehsignale mittels Stoppen einer Aufnahmefunktion bei gleichzeitigem Feststellen des Vorhandenseins des genannten Bestätigungssignals.

7. Steuerschaltkreis zum Identifizieren von Werbeinseraten-Einschaltungen gemäss dem in einem der Ansprüche 1 bis 3 definierten Verfahren, **gekennzeichnet durch** Mittel zum Steuern der Funktion (des Betriebszustandes) des genannten Empfangsgerätes mittels Unterdrückung der Audiosignale während Werbeinseraten-Einschaltungen, die mittels der genannten Feststellung der genannten Bestätigungssignale identifiziert worden sind.

8. Steuerschaltkreis zum Identifizieren von Werbeinseraten-Einschaltungen gemäss dem in einem der Ansprüche 1 bis 3 definierten Verfahren, **gekennzeichnet durch** Mittel zum Steuern der Funktion (des Betriebszustandes) des genannten Empfangsgerätes, indem automatisch das Programm (Kanal) gewechselt wird und das Empfangsgerät auf einen anderen Programmkanal eingestellt wird, der vorgängig gespeichert worden war, und indem nach Beendigung der Werbeinserat-Einschaltung, als Reaktion auf die das Feststellen der genanten Bestätigungssignale, zum ersten Programm (Kanal) zurückgekehrt wird.

9. Ein System, umfassend einen Steuerschaltkreis zum Identifizieren von Werbeinseraten-Einschaltungen gemäss dem Anspruch 7 oder 8, wobei das System zudem einen Videorecorder zum automatischen Steuern der Funktion (des Betriebszustandes) eines Fernsehempfängers umfasst, in solcher Weise dass das Audiosignal unterdrückt wird, oder dass während Werbeinseraten-Einschaltungen das Programm (Kanal) automatisch gewechselt wird.

## Revendications

1. Procédé d'utilisation de signaux de certification qui sont inclus sur une ligne active déterminée d'un signal de télévision, les signaux de certification étant initialement utilisés pour certifier automatiquement que des insertions publicitaires spécifiques déterminés à l'avance ont été transmises à un certain instant par le signal de télévision, le procédé étant tel que la présence ou l'absence de signaux de certification est détectée au moyen d'un circuit de commande qui fonctionne pour identifier la ligne active déterminée dans l'une des premières ou dernières lignes actives, les signaux de certification étant présents sur la ligne active identifiée avec une durée et une fréquence qui sont corrélées avec les insertions publicitaires, le procédé comprenant l'étape qui consiste à commander un dispositif de réception pour des signaux de télévision conformément à la présence ou absence détectée des signaux de certification.

2. Procédé suivant la revendication 1, dans lequel le nombre de lignes actives déterminées est introduit manuellement dans le circuit de commande par un personnel de service ou par l'utilisateur.

3. Procédé suivant la revendication 1 ou 2, dans lequel une absence de modulation audio et vidéo simultanée est détectée et utilisée en même temps que l'information de la présence des signaux de certification pour commander le fonctionnement du dispositif de réception des signaux de télévision.

4. Circuit de commande pour identifier des insertions publicitaires conformément au procédé tel que défini dans la revendication 3, **caractérisé par** des moyens destinés à mettre en oeuvre les étapes suivantes :
• détection de l'absence de modulation vidéo et audio simultanée pour une période déterminée à l'avance ;
• mémorisation de la position (C_{g}) atteinte par un tachymètre d'un dispositif d'enregistrement utilisé avec le dispositif de réception ;
• détection de l'apparition, à l'intérieur d'une période de temps déterminée, d'un signal de certification numérique dans la ligne active déterminée du signal de télévision ;
• arrêt du dispositif d'enregistrement et réenroulement de ce dernier jusqu'à la position mémorisée du tachymètre ; et
• redémarrage du dispositif d'enregistrement dès qu'il a détecté à la fois l'absence de signaux de certification numériques dans le signal de télévision et une nouvelle absence de modulation vidéo et audio simultanée pour la période déterminée à l'avance.

5. Circuit de commande pour l'identification d'insertions publicitaires conformément au procédé tel que défini à la revendication 3, **caractérisé par** des moyens pour mettre en oeuvre les étapes suivantes :
• détection de l'absence de modulation vidéo et audio simultanée pendant une période déterminée à l'avance ;
• détection de l'apparition, à l'intérieur de la période déterminée à l'avance, d'un signal de certification numérique dans la ligne active déterminée du signal de télévision ;
• arrêt d'un dispositif d'enregistrement utilisé avec le dispositif de réception ; et
• redémarrage du dispositif d'enregistrement dès qu'il est détecté à la fois l'absence de signaux de certification numériques dans le signal de télévision et une nouvelle absence de modulation vidéo et audio simultanée pour la période de temps déterminée à l'avance.

6. Circuit de commande pour identifier des insertions publicitaires conformément au procédé tel que défini dans l'une quelconque des revendications 1 à 3, **caractérisé par** des moyens destinés à commander le fonctionnement du dispositif de réception pour des signaux de télévision en arrêtant une opération d'enregistrement en concomitance avec la présence détectée du signal de certification.

7. Circuit de commande pour identifier des insertions publicitaires conformément au procédé tel que défini dans l'une quelconque des revendications 1 à 3, **caractérisé par** des moyens destinés à commander le fonctionnement du dispositif de réception en supprimant le signal audio pendant des insertions publicitaires identifiées par la détection des signaux de certification.

8. Circuit de commande pour identifier des insertions publicitaires conformément au procédé tel que défini dans l'une quelconque des revendications 1 à 3, **caractérisé par** des moyens destinés à commander le fonctionnement du dispositif de réception en modifiant automatiquement des programmes, en réglant le dispositif à un autre programme mémorisé précédemment et en revenant au premier programme à la fin de l'insertion publicitaire en réponse à la détection des signaux de certification.

9. Système comportant un circuit de commande pour identifier des insertions publicitaires conformément à la revendication 7 ou 8, le système comportant en outre un dispositif d'enregistrement vidéo destiné à commander automatiquement le fonctionnement d'un récepteur de télévision afin de supprimer le signal audio ou de modifier les programmes automatiquement pendant des insertions publicitaires.
